# EUROPEAN PATENT SPECIFICATION

(11) **EP 3 930 545 B1**
(45) Date of publication and mention of the grant of the patent: **17.09.2025**
(21) Application number: 20712023.9
(22) Date of filing: 24.02.2020
(51) Int. Cl.: A47J 31/36

(54) **MACHINE FOR MAKING A WARM BEVERAGE FROM SINGLE-DOSE UNITS**
MASCHINE ZUR HERSTELLUNG EINES WARMEN GETRÄNKES AUS EINZELDOSISEINHEITEN
MACHINE DE PRÉPARATION D'UNE BOISSON CHAUDE À PARTIR D'UNITÉS À DOSE UNIQUE

(30) Priority: 25.02.2019 IT 201900002633
(43) Date of publication of application: 05.01.2022
(73) Proprietor: La Piccola S.r.l., 25080 Padenghe Sul Garda (BS) (IT)
(72) Inventor: VENTURELLI, Gian Luca, 25080 Padenghe Sul Garda (BS) (IT)
(74) Representative: Modiano, Micaela Nadia
(86) International application number: PCT/IB2020/051520
(87) International publication number: WO 2020/174347

(56) References cited:
- WO-A1-2006/005755
- WO-A1-2006/126230
- WO-A1-2018/046400
- WO-A2-2007/110842
- US-A- 5 161 455
- US-A1- 2013 209 636

## Description

### Field of the invention

In its most general aspect, the present invention concerns a machine for making a warm beverage, especially, but not exclusively, coffee, from single-dose units of the pod or capsule type.

### State of the art

As known, in recent years, coffee machines that use single-dose powdered coffee units, for example pods or capsules, have conquered a significant portion of the market.

Among the various coffee machine models of the aforesaid type, the coffee machines in which, for example, the insertion of a pod occurs through a window opened on the front of the coffee machine are very popular.

In practice, a coffee machine of the type considered above comprises an outer structure, i.e. a casing, inside which, among the various components, a heat exchanger, a so-named upper pod-holder combined with the heat exchanger and a so-named lower pod-holder provided with a filter, wherein the upper pod-holder is movable with respect to the lower pod-holder, are housed.

In particular, the upper pod-holder can move away from and close to the lower pod-holder, along a vertical plane, so that to allow the positioning of the pod on the filter or the removal of the pod from the filter, and so that to respectively keep the same pod firm in the correct position for the infusion with water and the delivery of the coffee.

The movement of the upper pod-holder is achieved by means of a lever outside the casing, operated by the user and active on the same upper pod-holder.

In particular, the lever is operated upwards by the user to move the upper pod-holder away from the lower pod-holder, thus allowing the insertion of the pod between the upper pod-holder and the lower pod-holder, or its removal, and downwards to bring back the upper pod-holder close to the lower pod-holder.

Although advantageous, coffee machines of the type considered above are not devoid of drawbacks, among which the risk for the user of burning his fingers when inserting the pod in the little space comprised between the upper pod-holder and the lower pod-holder when they are positioned distal from each other.

It should be said that, during the pod extraction operation - which, among others, is not easy since the aforesaid little space comprised between the upper pod-holder and the lower pod-holder makes its access difficult -, the user runs the risk of burning himself.

Moreover, always due to the little space comprised between the upper pod-holder and the lower pod-holder when they are positioned distal from each other, the access to the filter is also disadvantageously difficult and its cleaning thus becomes problematic.

Moreover, it is disadvantageously not intuitive for the user, who must move the upper pod-holder and the lower pod-holder away from each other, the use of the lever in order to insert the pod.

Moreover, the pod can disadvantageously break rather easily during the extraction operation since it practically must be pulled by the user, among other things after having been wet.

Document US 2013/209636 A1 discloses a beverage forming method and system employing the introduction of air into a heater tank and/or an expansion chamber after liquid delivery is complete, wherein the expansion chamber may be provided at the top of the heater tank and provide a tortuous flow path from an air inlet to the tank outlet.

### Summary of the Invention

The technical problem underlying the present invention was to provide a machine for making a warm beverage from single-dose units, especially, but not exclusively, coffee, having structural and functional characteristics such as to overcome one or more of the aforesaid drawbacks with reference to the known

According to the invention, the aforesaid problem is solved by a machine for making a warm beverage from single-dose units, for example coffee, comprising:
a path for an infusion fluid, extended between an inlet and an outlet of the aforesaid fluid,
a heat exchanger for exchanging heat at least along part of the aforesaid path,
an upper single-dose unit holder in fluidic communication with the aforesaid path at the aforesaid outlet,
a lower single-dose unit holder comprising a filter arranged below the aforesaid upper single-dose unit holder,
a delivery spout in fluidic communication with the aforesaid filter,
wherein the aforesaid lower single-dose unit holder is movable with respect to the aforesaid upper single-dose unit holder between a first position, in which the aforesaid lower single-dose unit holder and the aforesaid upper single-dose unit holder are substantially overlapping and coaxial to each other, forming an infusion chamber for the aforesaid single-dose unit, and a second position in which the aforesaid lower single-dose unit holder and the aforesaid upper single-dose unit holder are arranged staggered to each other, i.e. at least neither overlapping nor coaxial to each other.

In practice, according to the present invention, the aforesaid lower single-dose unit holder is movable between the aforesaid first position and the aforesaid second position between which it can switch through a translatory, rotary or roto-translatory movement, substantially on a horizontal plane, the aforesaid upper single-dose unit holder being preferably fixed.

Preferably, the aforesaid upper single-dose unit holder and the aforesaid lower single-dose unit holder are circular in shape and are more preferably of the same width.

Preferably, the aforesaid machine for making a warm beverage from single-dose units comprises a casing provided with a window, wherein the aforesaid lower single-dose unit holder in the aforesaid first position is substantially inside the aforesaid casing, and wherein the aforesaid lower single-dose unit holder in the aforesaid second position is substantially outside of the aforesaid casing.

Preferably, the aforesaid machine for making a warm beverage from single-dose units comprises a closing-opening element for the closing and opening of the aforesaid window, wherein the aforesaid lower single-dose unit holder is more preferably integral with the aforesaid closing-opening element.

Preferably, the aforesaid lower single-dose unit holder comprises a plate provided with a hole surrounded by an edge, wherein the aforesaid filter is removably combined with the aforesaid edge.

Preferably, the aforesaid machine for making a warm beverage from single-dose units comprises movement means for displacing the aforesaid lower single-dose unit holder between the aforesaid first position and the aforesaid second position, wherein the aforesaid movement means are manually, electrically or pneumatically activated.

Preferably, the aforesaid manually activated movement means comprise a lever operable by the user, a cam integral with the aforesaid lever, a shaped element on which the aforesaid cam operates, and a connecting element, wherein the aforesaid connecting element is constrained, at a first side, to the aforesaid shaped element and, at a second side opposed the aforesaid first side, to the aforesaid closing-opening element for the closing and opening of the aforesaid window.

Preferably, the aforesaid closing-opening element comprises at least one hinge element having a slot, and the aforesaid connecting element at the aforesaid second side comprises a hole, wherein the aforesaid manually activated means comprise a pin or plug which engage the aforesaid slot and the aforesaid hole.

Preferably, the aforesaid cam, at a lobe, comprises a circular element, wherein the aforesaid circular element is rotationally free.

Preferably, the aforesaid shaped element has a rotation axis parallel to the rotation axis of the aforesaid cam.

Preferably, the aforesaid movement means comprise return means active on the aforesaid lower single-dose unit holder for the displacement from the aforesaid second position to the aforesaid first position, wherein the aforesaid return means preferably comprise an elastic element having an end integral with the aforesaid lower single-dose unit holder.

### Brief description of the figures

Further characteristics and advantages of the invention will be better highlighted in the following detailed description of a preferred, but not exclusive, embodiment illustrated by way of example, and without limitations, with the aid of the accompanying drawings, in which:

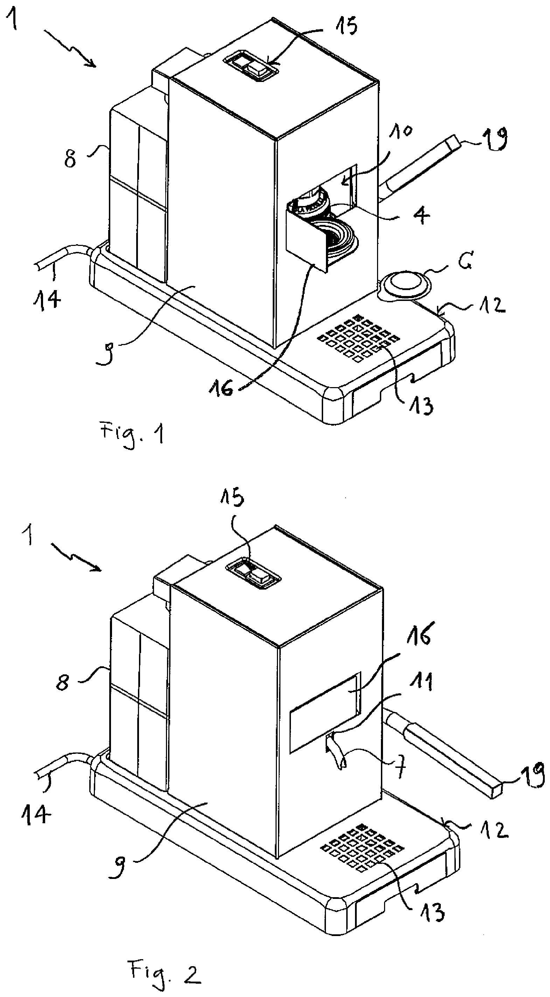

- figure 1 shows a schematic perspective view of a machine for making a warm beverage from single-dose units, comprising a casing and a lower single-dose unit holder, wherein the lower single-dose unit holder is movable with respect to the casing, in a first configuration with the lower single-dose unit holder outside the casing, according to the present invention, together with a pod comprising a single dose of coffee.
- figure 2 shows the machine of figure 1 in a second configuration with the lower single-dose unit holder inside the casing;

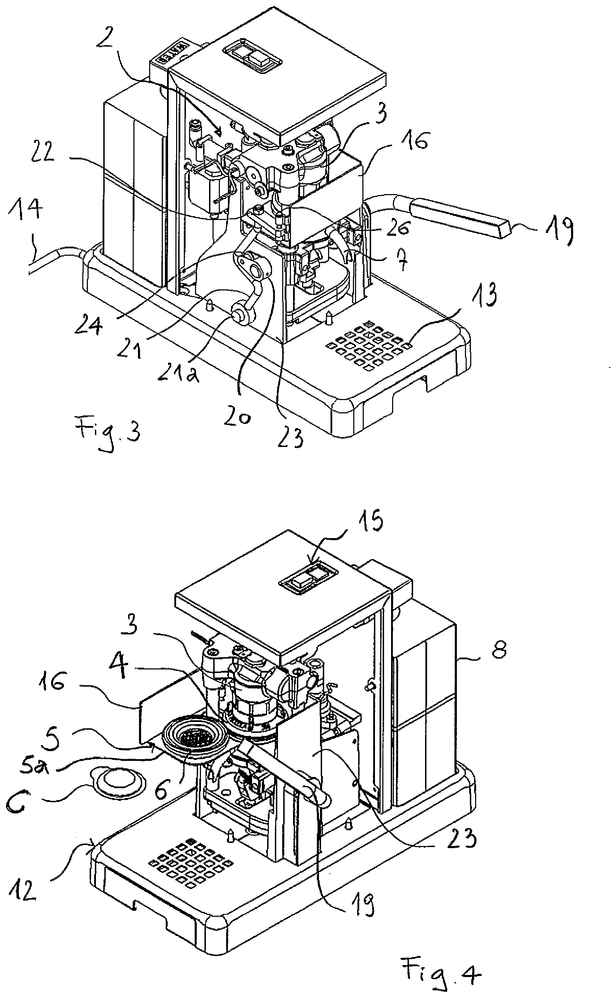

- figure 3 shows the machine of figure 2 devoid of the casing;
- figure 4 shows the machine of figure 1, shown from a different angle and devoid of the casing, together with the aforesaid pod comprising a single dose of coffee;

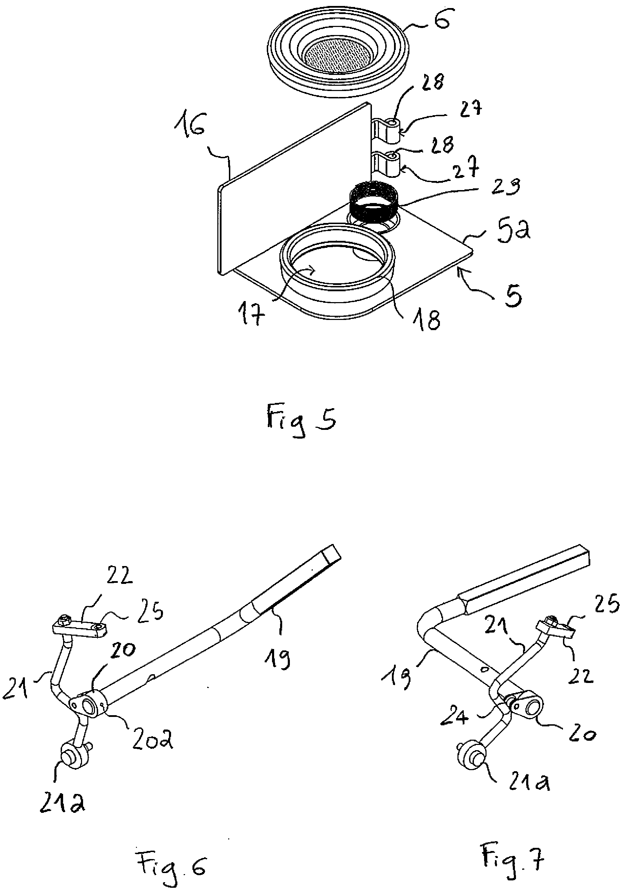

- figure 5 shows the lower single-dose unit holder of the machine of figure 1, enlarged and in separate parts;
- figures 6 and 7 show a particular of the machine of figure 1 according to two different perspectives.

### Detailed description of the invention

With reference to the aforesaid figures, **1** generally denotes a machine for making a warm beverage from single-dose units according to the present invention.

In particular, the invention is depicted with reference to the making of a coffee-based beverage, for example from a pod containing a predetermined amount of powdered coffee, in the examples of the figures denoted by **C,** but it is understood that the present machine for making a warm beverage from single-dose units can also be used for making other warm beverages obtained by infusion, for example from a pod or a capsule of barley, ginseng, tea, chamomile or other medicinal herbs.

The machine for making a warm beverage from single-dose units according to the present invention, for simplicity hereinafter also simply named machine, essentially comprises a path for an infusion fluid, generally denoted by **2,** extending between an inlet and an outlet of the fluid, a heat exchanger **3** for exchanging heat at least along part of the path **2,** an upper single-dose unit holder **4** in fluidic communication with the path **2** at the aforesaid outlet, a lower single-dose unit holder **5** comprising a filter **6** and arranged below the upper single-dose unit holder **4,** and a delivery spout **7** in fluidic communication with the filter **6.**

In a known way, the path **2** can in turn be connected at its inlet with a source of the aforesaid liquid, for example a tap of a water supply network, or, as shown in the examples of the figures, with a water tank **8,** and, always in a known way, the present machine can comprise a pump for the circulation of the aforesaid liquid, not shown in the figures.

According to the invention, the lower single-dose unit holder **5** is movable with respect to the upper single-dose unit holder **4,** in particular movable between a first position, in which the lower single-dose unit holder **5** and the upper single-dose unit holder **4** are substantially overlapping and coaxial to each other, forming an infusion chamber for the single-dose unit, and a second position in which the lower single-dose unit holder **5** and the upper single-dose unit holder **4** are arranged staggered from one another, i.e. arranged at least in part not overlapping each other, and thus substantially not coaxial to each other.

In practice, according to the present invention, the lower single-dose unit holder **5** is movable between the aforesaid first position and the aforesaid second position between which it can switch through a translatory, rotary or roto-translatory movement on a horizontal plane, whereas the upper single-dose unit holder **4** is preferably fixed.

It should be said that the upper single-dose unit holder **4** and the lower single-dose unit holder **5** preferably are circular in shape and that they more preferably are of the same width, thus preferably of the same diameter.

According to the examples of the figures, the machine **1** comprises a casing **9** provided with a window **10** and, according to the above, the lower single-dose unit holder **5** is substantially inside the casing **9** in the aforesaid first position, whereas it is substantially outside the casing **9** in the aforesaid second position, being displaced through the window **10.**

According to the examples of the figures, the casing **9** further comprises an opening **11** for the delivery spout **7,** whereas the machine **1** more generally comprises a base **12** with a drainage **13,** a cable **14** for the electric power supply and control buttons **15.**

According to the examples of the figures, the machine **1** comprises a closing-opening element for the closing and opening of the aforesaid window, denoted by **16,** in practice a movable small door, with which the lower single-dose unit holder **5** is combined according to the invention.

In detail, the lower single-dose unit holder **5** is integral with the closing-opening element **16** and substantially comprises a plate **5a** orthogonal to the closing-opening element **16,** so that, when opening the window **10** i.e. activating the opening of the closing-opening element **16,** the lower single-dose unit holder **5** switches from the aforesaid first position to the aforesaid second position, whereas by closing the window **10,** namely by closing the closing-opening element **16,** the lower single-dose unit holder **5** switches from the aforesaid second position to the aforesaid first position, as will become clearer hereunder.

According to the invention, the filter **6,** which is removably combined with the plate **5a,** also moves with the plate **5a.**

With regard to this, the plate **5a** is provided with a hole **17** surrounded by an edge **18** against which the filter 6 rests.

In order to move the lower single-dose unit holder **5,** thus the filter 6 and also the closing-opening element **16** according to the examples of the figures, the machine according to the present invention can comprise manual, electrical or pneumatic movement means.

According to the figures, manually activated movement means, which comprise a lever **19** operable by the user, a cam **20** integral with the lever **19,** a shaped element **21** on which the cam **20** operates, and a connecting element **22** which is constrained, at a first side, to the shaped element **21,** and at a second side opposite the first side, to the closing-opening element **16** of the window **10,** are shown in the figures by way of example.

In detail, the lever **19** has a first portion arranged outside of a first side of the casing **9,** such as to be operated by the user upwards from the bottom, and vice-versa, and a second substantially horizontal portion inside the casing **9,** the casing thus being provided with a passage for the lever **19.**

It should be added that the lever **19** is supported inside the casing **9** by a couple of partitions **23** arranged opposite each other and provided with respective passages, and that the lever **19** is made integral with the cam **20** by means of a dowel **20a,** the possibility of providing the lever and cam welded to each other not however being excluded.

In particular, according to the above, at the partition **23,** which is in a position distal from the portion of the lever **19** outside the casing **9,** the lever **19** has an end combined with the cam **20** which can thus rotate following the movement of the lever **19.**

Moreover, the cam **20,** at a lobe, comprises a circular element **24** which is rotationally free, thus idly mounted on the lobe of the cam **20,** and which acts on the shaped element **21** by rotating.

With regard to this, it should be said that the shaped element **21,** which is hinged by means of a pin **21a** at the same partition **23** at which the cam **20** is arranged, has a rotation axis parallel to the rotation axis of the cam **20.**

As far as the connecting element **22** is concerned, it should be mentioned that it practically consists of a fitting with two holes, wherein a first hole is engaged by an end of the shaped element **21,** and wherein a second hole **25** is engaged by a pin or plug **26** that constrains it to the closing-opening element **16** of the window **10.**

With regard to this, the closing-opening element **16** comprises at least one hinge element **27** having a slot **28,** and, according to the examples of the figures, comprises two hinge elements **27** each having a respective slot **28,** wherein the slots **28,** as well as the second hole **25,** are engaged by the pin or plug **26,** whereas an end of the connecting element **22** is advantageously arranged between the two hinge elements **27.**

In practice, by rotating the lever **19,** the shaped element **21** rotates around the pin **21a** hinged to the partition **23,** and in particular by rotating, so to speak, towards the tank **8,** it drags the connecting element **22,** which is in turn integral with the closing-opening element **16** which thus opens.

When the closing-opening element **16** is open, the lower single-dose unit holder **5** is outside the casing **9,** and the access is facilitated for the user since the space above it is not obstructed by the upper single-dose unit holder **4** which is not in-line with the lower single-dose unit holder.

The user can thus easily insert or better lean the single-dose coffee unit, thus the pod **C** according to the examples of the figures, on the lower single-dose unit holder **5,** and can just as easily clean the filter **6,** also by possibly removing it from the plate **5a** of the lower single-dose unit holder **5.**

As far as the return of the closing-opening element **16** to the first closed position is concerned, it should be said that the aforesaid movement means preferably comprise return means active on the lower single-dose unit holder **5** for the displacement of the latter from the second position to the first position, wherein the return means, according to the example of the figures, comprise an elastic element **29,** in practice a spring, having an end integral with the plate **5a** of the lower single-dose unit holder **5** and an end integral with a supporting element arranged inside the casing **9,** not shown in the figures.

In alternative to the above, electrical or pneumatic return means can be provided.

It should be said that the repositioning of the lower single-dose unit holder **5** in the first position can also occur manually, in practice by pushing the movable small door whenever return means are not provided, or still the return of the lower single-dose unit holder **5** in the first position can be achieved by operating the lever downwards.

The advantages of the present invention, which became clear in the description specified above, can be summarized by noting that a machine for making a warm beverage from single-dose units and which allows the user to easily insert a single-dose unit in the machine and to easily remove it therefrom, is provided.

Advantageously, the user can still insert the single-dose unit in the machine and remove it from the machine without running the risk of burning himself.

Advantageously, it is still possible to clean the filter thoroughly and easily.

In order to meet incidental and specific requirements, several variations and modifications could be made by a field technician to the illustrated and described embodiments of present invention, provided that all are included in the protection scope of the invention as defined by the following claims.

## Claims

1. Machine (1) for making a warm beverage from single-dose units (C), comprising:
a path (2) for an infusion fluid, extended between an inlet and an outlet of said fluid,
a heat exchanger (3) for exchanging heat at least along part of said path (2),
an upper single-dose unit holder (4) in fluidic communication with said path at said outlet,
a lower single-dose unit holder (5) comprising a filter (6) arranged below said upper single-dose unit holder (4),
a delivery spout (7) in fluidic communication with said filter (6),
wherein said lower single-dose unit holder (5) is movable with respect to said upper single-dose unit holder (4), between a first position in which said lower single-dose unit holder (5) and said upper single-dose unit holder (4) are substantially overlapping and coaxial to each other, forming an infusion chamber for the aforesaid single-dose unit, and a second position in which said lower single-dose unit holder (5) and said upper single-dose unit holder (4) are arranged staggered and not coaxial to each other, said lower single-dose unit holder (5) and said upper single-dose unit holder (4) being arranged at least partly not overlapping each other in said second position.

2. Machine according to claim 1, comprising a casing (9) provided with a window (10), wherein said lower single-dose unit holder (5) is substantially inside said casing (9) in said first position and is substantially outside said casing (9) in said second position.

3. Machine according to claim 2, comprising a closing-opening element (16) for the closing and opening of said window (10), wherein said lower single-dose unit holder (5) is preferably integral with said closing-opening element (16).

4. Machine according to any one of the preceding claims, wherein said lower single-dose unit holder (5) comprises a plate (5a) provided with a hole (17) surrounded by an edge (18), and wherein said filter (6) is removably combined with said edge (18).

5. Machine according to any one of the preceding claims, comprising movement means for displacing said lower single-dose unit holder (5) between said first position and said second position, wherein said movement means are manually, electrically or pneumatically activated.

6. Machine according to claim 5, wherein said manually activated movement means comprise a lever (19) activatable from the outside of said casing (9), a cam (20) integral with said lever (19), a shaped element (21) on which said cam (20) operates, and a connecting element (22), wherein said connecting element (22) is constrained, at a first side, to said shaped element (21) and at a second side opposed to said first side, to said closing-opening element (16).

7. Machine according to claim 6, wherein said closing-opening element (16) comprises at least one hinge element (27) having a slot (28), and said connecting element (22) comprises a hole (25) at said second side, wherein said manually activated movement means comprise a pin or plug (26) which engage said slot (28) and said hole (25).

8. Machine according to claim 6 or 7, wherein said cam (20) comprises, at a lobe, a circular element (24), wherein said circular element is rotationally free.

9. Machine according to any one of claims 6-8, wherein the rotation axis of said shaped element (21) is parallel to the rotation axis of said cam (20).

10. Machine according to any one of claims 5-9, wherein said movement means comprise return means active on said lower single-dose unit holder (5) for the displacement from said second position to said first position, wherein said return means comprise an elastic element (29) having an end integral with said lower single-dose unit holder.

11. Machine according to any one of the preceding claims, wherein said lower single-dose unit holder (5) is movable between said first position and said second position through a translatory, rotary or roto-translatory movement, substantially on a horizontal plane, wherein said upper single-dose unit holder (4) is preferably fixed.

## Patentansprüche

1. Maschine (1) zur Herstellung eines warmen Getränks aus Einzeldosiseinheiten (C), die Folgendes umfasst:
einen Pfad (2) für eine Flüssigkeit zum Aufgießen, der sich zwischen einem Einlass und einem Auslass für die Flüssigkeit erstreckt,
einen Wärmetauscher (3) zum Austausch von Wärme entlang zumindest einem Teil des Pfades (2),
einen oberen Halter (4) für eine Einzeldosiseinheit in Flüssigkeitsaustausch mit dem Pfad an dem Auslass,
einen unteren Halter (5) für eine Einzeldosiseinheit, der einen Filter (6) umfasst, angeordnet unter dem oberen Halter (4) für eine Einzeldosiseinheit,
einen Ausguss (7) in Flüssigkeitsaustausch mit dem Filter (6),
wobei der untere Halter (5) für eine Einzeldosiseinheit mit Bezug auf den oberen Halter (4) für eine Einzeldosiseinheit beweglich ist zwischen einer ersten Position, in welcher der untere Halter (5) für eine Einzeldosiseinheit und der obere Halter (4) für eine Einzeldosiseinheit sich im Wesentlichen überlagern, koaxial miteinander sind und so eine Aufgusskammer für die oben erwähnte Einzeldosiseinheit bilden, und einer zweiten Position, in welcher der untere Halter (5) für die Einzeldosiseinheit und der obere Halter (4) für die Einzeldosiseinheit versetzt und nicht koaxial miteinander angeordnet sind; wobei der untere Halter (5) für die Einzeldosiseinheit und der obere Halter (4) für die Einzeldosiseinheit in der zweiten Position einander zumindest teilweise nicht überlagernd angeordnet sind.

2. Maschine gemäß Anspruch 1, die ein mit einem Fenster (10) versehenes Gehäuse (9) umfasst, wobei der untere Halter (5) für die Einzeldosiseinheit sich in der ersten Position im Wesentlichen innerhalb des Gehäuses (9) und in der zweiten Position im Wesentlichen außerhalb des Gehäuses (9) befindet.

3. Maschine gemäß Anspruch 2, die ein Schließ-/Öffnungselement (16) zum Schließen und Öffnen des Fensters (10) umfasst, wobei der untere Halter (5) für die Einzeldosiseinheit vorzugsweise integral mit dem Schließ-/Öffnungselement (16) ist.

4. Maschine gemäß einem beliebigen der obigen Ansprüche, wobei der untere Halter (5) für die Einzeldosiseinheit eine Platte (5a) umfasst, die mit einem Loch (17) versehen ist, welches von einem Rand (18) umgeben ist, und wobei der Filter (6) lösbar mit dem Rand (18) verbunden ist.

5. Maschine gemäß einem beliebigen der obigen Ansprüche, die Bewegungsmittel zum Verschieben des unteren Halters (5) für die Einzeldosiseinheit zwischen der ersten Position und der zweiten Position umfasst, wobei die Bewegungsmittel manuell, elektrisch oder pneumatisch angetrieben sind.

6. Maschine gemäß Anspruch 5, wobei die manuell angetriebenen Bewegungsmittel einen Hebel (19) umfassen, der von außerhalb des Gehäuses (9) betätigt werden kann, eine Nockenscheibe (20), die integral mit dem Hebel (19) ist, ein geformtes Element (21), auf das die Nockenscheibe (20) einwirkt, und ein Verbindungselement (22), wobei das Verbindungselement (22) auf einer ersten Seite an dem geformten Element (21) und auf einer zweiten Seite gegenüber der ersten Seite an dem Schließ-/Öffnungselement (16) eingespannt ist.

7. Maschine gemäß Anspruch 6, wobei das Schließ-/Öffnungselement (16) mindestens ein Scharnierelement (27) mit einem Schlitz (28) umfasst und das Verbindungselement (22) auf der zweiten Seite ein Loch (25) umfasst, wobei die manuell angetriebenen Bewegungsmittel einen Stift oder Stöpsel (26) umfassen, der in den Schlitz (28) und das Loch (25) eingreift.

8. Maschine gemäß Anspruch 6 oder 7, wobei die Nockenscheibe (20) an einem Nocken ein kreisförmiges Element (24) umfasst, welches frei drehbar ist.

9. Maschine gemäß einem beliebigen der Ansprüche 6-8, wobei die Drehachse des geformten Elements (21) parallel zur Drehachse der Nockenscheibe (20) ist.

10. Maschine gemäß einem beliebigen der Ansprüche 5-9, wobei die Bewegungsmittel Rückstellmittel umfassen, die zur Verschiebung aus der zweiten Position in die erste Position auf den unteren Halter (5) für die Einzeldosiseinheit einwirken, wobei die Rückstellmittel ein elastisches Element (29) umfassen, dessen eines Ende integral mit dem unteren Halter für die Einzeldosiseinheit ist.

11. Maschine gemäß einem beliebigen der obigen Ansprüche, wobei der Halter (5) für die untere Einzeldosiseinheit beweglich ist zwischen der ersten Position und der zweiten Position durch eine translatorische, rotatorische oder rotatorische und translatorische Bewegung, im Wesentlichen auf einer horizontalen Ebene, wobei der obere Halter (4) für die Einzeldosiseinheit vorzugsweise feststeht.

## Revendications

1. Machine (1) pour préparer une boisson chaude à partir d'unités à dose unique (C), comprenant :
un chemin (2) pour un fluide à infuser, s'étendant entre une entrée et une sortie dudit fluide,
un échangeur de chaleur (3) pour échanger de la chaleur au moins le long d'une partie dudit chemin (2),
un support supérieur (4) pour une unité à dose unique (C), en communication fluidique avec ledit chemin au niveau de ladite sortie,
un support inférieur (5) pour une unité à dose unique, comprenant un filtre (6) disposé sous ledit support supérieur (4) pour une unité à dose unique,
un bec de distribution (7) en communication fluidique avec ledit filtre (6),
où ledit support inférieur (5) pour une unité à dose unique est mobile par rapport audit support supérieur (4) pour une unité à dose unique, entre une première position dans laquelle ledit support inférieur (5) pour une unité à dose unique et ledit support supérieur (4) pour une unité à dose unique se chevauchent sensiblement et sont coaxiaux l'un par rapport à l'autre, formant une chambre de perfusion pour l'unité à dose unique susmentionnée, et une deuxième position dans laquelle ledit support inférieur (5) pour une unité à dose unique et ledit support supérieur (4) pour une unité à dose unique sont disposés de manière décalée et non coaxiaux l'un par rapport à l'autre, ledit support inférieur (5) pour une unité à dose unique et ledit support supérieur (4) pour une unité à dose unique étant disposés au moins en partie sans se chevaucher dans ladite deuxième position.

2. Machine selon la revendication 1, comprenant un boîtier (9) muni d'une fenêtre (10), où ledit support inférieur d'unité à dose unique (5) se trouve sensiblement à l'intérieur dudit boîtier (9) dans ladite première position et sensiblement à l'extérieur dudit boîtier (9) dans ladite deuxième position.

3. Machine selon la revendication 2, comprenant un élément d'ouverture-fermeture (16) pour fermer et ouvrir ladite fenêtre (10), dans laquelle ledit support inférieur (5) pour une unité à dose unique est de préférence solidaire dudit élément d'ouverture-fermeture (16).

4. Machine selon l'une quelconque des revendications précédentes, où ledit support inférieur d'unité à dose unique (5) comprend une plaque (5a) pourvue d'un trou (17) entouré d'un bord (18), et où ledit filtre (6) est combiné de manière amovible avec ledit bord (18).

5. Machine selon l'une quelconque des revendications précédentes, comprenant des moyens de déplacement pour déplacer ledit support inférieur d'unité à dose unique (5) entre ladite première position et ladite deuxième position, où lesdits moyens de déplacement sont actionnés manuellement, électriquement ou pneumatiquement.

6. Machine selon la revendication 5, où lesdits moyens de déplacement actionnés manuellement comprennent un levier (19) actionnable depuis l'extérieur dudit boîtier (9), une came (20) solidaire dudit levier (19), un élément profilé (21) sur lequel agit ladite came (20), et un élément de liaison (22), où ledit élément de liaison (22) est contraint, d'un premier côté, audit élément profilé (21) et d'un second côté opposé audit premier côté, audit élément de fermeture-ouverture (16).

7. Machine selon la revendication 6, où ledit élément de fermeture-ouverture (16) comprend au moins un élément de charnière (27) comportant une fente (28), et ledit élément de liaison (22) comprend un trou (25) au niveau dudit second côté, où lesdits moyens de déplacement actionnés manuellement comprennent une goupille ou un bouchon (26) qui s'engage dans ladite fente (28) et dans ledit trou (25).

8. Machine selon la revendication 6 ou 7, où ladite came (20) comprend, au niveau d'un lobe, un élément circulaire (24), et où ledit élément circulaire est libre en rotation.

9. Machine selon l'une quelconque des revendications 6 à 8, dans laquelle l'axe de rotation dudit élément profilé (21) est parallèle à l'axe de rotation de ladite came (20).

10. Machine selon l'une quelconque des revendications 5 à 9, où lesdits moyens de déplacement comprennent des moyens de retour agissant sur ledit support inférieur d'unité à dose unique (5) pour le déplacement de ladite deuxième position à ladite première position, où lesdits moyens de retour comprennent un élément élastique (29) ayant une extrémité solidaire dudit support inférieur d'unité à dose unique.

11. Machine selon l'une quelconque des revendications précédentes, dans laquelle ledit support inférieur (5) d'unité à dose unique est mobile entre ladite première position et ladite deuxième position par un mouvement de translation, de rotation ou de rotation-translation, sensiblement dans un plan horizontal, où ledit support supérieur (4) d'unité à dose unique est de préférence fixe.
